# EUROPEAN PATENT APPLICATION

(11) **EP 4 822 151 A1**
(43) Date of publication of application: **14.10.2026**
(21) Application number: 25169027.7
(22) Date of filing: 08.04.2025
(51) Int. Cl.: F01N 13/10, F01N 3/20, F02B 37/00, F02B 37/007

(54) **EXHAUST GAS MANIFOLD MODULES**

(71) Applicant: WinGD Ltd., 8400 Winterthur (CH)
(72) Inventor: Sönnichsen, Samuel, 8405 Winterthur (CH)
(74) Representative: Hepp Wenger Ryffel AG

(57) **Abstract**

The invention is related to exhaust gas manifold modules, an exhaust gas manifold system, an exhaust gas treatment device for an internal combustion engine, an internal combustion engine comprising such an exhaust gas treatment device, and a method for operating such an internal combustion engine. The exhaust gas manifold module (100) comprises a housing (110, 110') encompassing a receiving section (120, 120') a distribution section (130, 130') separated from the receiving section (120, 120'). The receiving section (120, 120') comprises at least one cylinder inlet (121) fluidly connected or connectable to a cylinder (210) of the engine (200) for receiving exhaust gas from the respective cylinder (210), at least one catalyst-outlet (122) fluidly connected or connectable to a catalyst (202) for guiding exhaust gas to the catalyst (202), and at least two first turbocharger outlets (123) each fluidly connected or connectable to a turbocharger (203) for guiding exhaust gas to the respective turbocharger (203). The distribution section (130, 130') comprises at least one catalyst-inlet (131, 131') fluidly connected or connectable to the catalyst (202) for receiving exhaust gas from the catalyst (202), and at least two second turbocharger outlets (132) each fluidly connected or connectable to the respective turbocharger (203) as for the first turbocharger outlets (123) for guiding exhaust gas to the respective turbocharger (203). Optionally there can be an interface (140) to a second exhaust gas manifold module (100') which connects the receiving sections (120, 120') and distribution sections (130, 130') of both modules (100,100').

## Description

### Technical Field

The invention is related to exhaust gas manifold modules, an exhaust gas manifold system, an exhaust gas treatment device for an internal combustion engine, an internal combustion engine comprising such an exhaust gas treatment device, and a method for operating such an internal combustion engine.

### Background Art

Large engines, which can be configured as two-stroke or four-stroke engines, e.g**.** as longitudinally scavenged two-stroke large engines or two-stroke cross-head engines, are often used as drive units for ships, particularly large ships and vessels for the transport of goods, or in stationary operations such as driving large generators for generating electrical energy. The engines usually run for considerable periods in continuous operation, which places high demands on operational safety and availability. As a consequence, particularly long maintenance intervals, low wear, and economical handling of the operating materials are central criteria for the operator. Large engines typically have cylinders with an inner diameter (bore) of at least 200 mm**.** Large engines may have a bore of up to 980 mm or even more are used. Within the framework of this application, the term "large engine" designates an internal combustion engine with a bore of the cylinder(s) that is at least 200 mm and preferably at least 300 mm. Engine speed is preferably below 800 RPM, especially for four-stroke engines, and more preferably below 200 RPM for two-stroke engines, which indicates the designation of low-speed engines.

Large engines are classically configured as large diesel engines, which are operated with heavy fuel oil. The engine can be a diesel or a gas engine, a dual-fuel or a multi-fuel engine. Under the aspects of economic and efficient operation, compliance with exhaust-gas limit values, sustainability, reduction of CO₂- and NOx- emissions, and the availability of resources, alternatives to heavy fuel oil are now also being sought for large engines. In this respect, both liquid fuels, i.e. fuels that are introduced into the combustion chamber in the liquid state, and gaseous fuels, i.e**.** fuels that are introduced into the combustion chamber in the gaseous state, are used.

Examples of liquid fuels as known alternatives to heavy fuel oil are other heavy hydrocarbons, which are particularly left over as residues from oil refining; alcohols, in particular methanol or ethanol; ammonia; gasoline; diesel; or also emulsions or suspensions such as slurries. Biological fuels, such as oil made from algae or seaweed, HVO (hydro-treated vegetable oil), and FAME (fatty acid methyl ester) based fuels are also possible. For example, it is known to use emulsions known as MSAR (Multiphase Superfine Atomized Residue) as fuel. As gaseous fuels, natural gases such as LNG (liquefied natural gas), liquefied gases such as LPG (liquefied petroleum gas), natural gas (NG), petrol gas (PG), ethane, or hydrogen are known. Further possible fuels comprise LBG (liquefied biogas), hydrogen, and synthetic fuels from CO₂ (e.g., made by Power-To-Gas or Power-To-Liquid processes) .

In particular, large engines are also known which can be operated with at least two or even more different fuels, whereby the engine is operated either with one fuel or with the other fuel depending on the operating situation or environment. It is also known to concurrently inject the two different fuels into the combustion chamber of the cylinder.

Large engines that can be operated with two or more different fuels are referred to as dual-fuel or multi-fuel large engines. Depending on the fuels, these engines may be operated in a liquid mode, in which a liquid fuel is introduced into the cylinder for combustion, and/or in a gas mode, in which a gas is introduced into the cylinder as fuel.

Large engines, which can be operated with at least two or even more different liquid or gaseous fuels, are often operated in different operating modes depending on the fuel currently in use. In the operating mode often referred to as diesel operation, the combustion of the fuel generally takes place according to the principle of compression ignition or self-ignition of the fuel. In the mode often referred to as Otto operation, combustion takes place by induced ignition. This induced ignition can take place, for example, by an electrical spark (e.g., with a spark plug) or by the self-ignition of a small injected amount of fuel (pilot fuel), which then causes the induced ignition of another fuel. The small amount of fuel intended for self-ignition is directly inserted into the combustion chamber or injected into a pre-chamber connected to the combustion chamber. Forced ignition can thus be achieved by use of a pre-chamber, a spark plug, and/or a pilot fuel. The process of induced ignition by self-ignition of a small amount of a liquid or another self-igniting fuel is sometimes referred to as pilot injection. Furthermore, mixed forms using both Otto and diesel operation are also known.

In particular, in view of attempts to reduce greenhouse gas emissions, the reduction of CO₂ production, and sustainability goals, a reduction in the use of fossil fuels is strived for. Thus, alternatives are investigated to at least reduce or even completely avoid the use of fossil fuels in large engines. Even if this is still a long way off, a partial replacement of fossil fuels by renewable fuels is considered a significant success. Alternatives to fossil fuel are, for example, methanol or ammonia.

Typically, exhaust gas is treated in an exhaust gas aftertreatment device, preferably comprising at least on SCR reactor, to remove any hazardous components of the exhaust gas.

An exhaust gas receiver may be fluidly connected with a turbocharger while also being able to fluidly connect to some kind of aftertreatment device.

All piping and valves for such fluid connections take up space and need to be customised for each engine system, depending on which turbocharger, which arrangement of the turbocharger, and which arrangement and components of the exhaust gas treatment device are used. This increases complexity and costs.

EP2527611 A1 proposes a compact design for an after treatment device, wherein an elongated exhaust gas manifold and a catalyst container are arranged parallel to each other and separated from each other by a partition wall extending along longitudinal direction. However, space can still be limited and support structures might be required.

### Disclosure of the Invention

It is therefore an objective of the present invention to at least in part overcome the drawbacks of the prior art solutions and in particular to provide exhaust gas manifold modules, an exhaust gas manifold system, an exhaust gas treatment device for an internal combustion engine, an internal combustion engine comprising such an exhaust gas treatment device, and a method for operating such an internal combustion engine, which are in particular more compact and/or less complex.

This objective is achieved by exhaust gas manifold modules, an exhaust gas manifold system, an exhaust gas treatment device for an internal combustion engine, an internal combustion engine comprising such an exhaust gas treatment device, and a method for operating such an internal combustion engine according to the independent claims.

Accordingly, as a first aspect of the invention, an exhaust gas manifold module for a large internal combustion engine comprises a housing. The housing may have an elongated extension along a first axis. The circumference of the cross-sectional area perpendicular to the first axis may be convex.

The housing encompasses a receiving section and a distribution section.

The receiving section comprises at least one cylinder inlet fluidly connected or connectable to a cylinder of the engine for receiving exhaust gas from the respective cylinder. Preferably, the receiving section comprises a plurality of cylinder inlets, in particular one cylinder inlet per cylinder of the internal combustion engine. The number of the cylinder inlets is preferably equal or may be smaller than the number of the cylinders of the internal combustion engine.

The receiving section comprises at least one catalyst-outlet fluidly connected or connectable to a catalyst for guiding exhaust gas to the catalyst.

The receiving section comprises at least two first turbocharger outlets each fluidly connected or connectable to a turbocharger for guiding exhaust gas to the respective turbocharger.

The housing further encompasses a distribution section separated from the receiving section. The distribution section comprises at least one catalyst-inlet fluidly connected or connectable to the catalyst for receiving exhaust gas from the catalyst.

The housing further encompasses at least two second turbocharger outlets each fluidly connected or connectable to the respective turbocharger as for the first turbocharger outlets for guiding exhaust gas to the respective turbocharger.

The presence of at least two first turbocharger outlets and at least two second turbocharger outlets allows supplying at least two turbochargers.

The use of a plurality of small turbochargers instead of a single larger turbocharger provides a more comfortable maintenance. A smaller turbocharger may be removed from the ship for exchange and/or repair. A larger turbocharger can be more difficult to disassemble and may have to be maintained and/or repaired on ship. This increases the maintenance costs.

However, alternatively, the at least two first turbocharger outlets and the at least two second turbocharger outlets may also be fluidly connected or connectable to the same turbocharger.

The positions and/or the cross-sectional areas of the at least two first and at least two second turbocharger outlets may be specified such that equal amounts of exhaust gas enter the turbochargers through the first turbochargers outlets and/or through the second turbochargers outlets, respectively. Thus, similar or equal turbochargers with the same load may be used in parallel.

The exhaust gas manifold module may comprise an interface configured for fluidly connecting the exhaust gas manifold module to a further exhaust gas manifold module with a further receiving section and a further distribution section. In a fluidly connected state, the receiving section may be fluidly connected to the further receiving section and the distribution section may be fluidly connected to the further distribution section.

The interface allows combining exhaust gas manifold modules to an exhaust gas manifold system. The exhaust gas manifold system may receive exhaust gas from all cylinders, whereas a single exhaust gas manifold module only receives exhaust gas from only a part of the cylinders. This helps to make the system more modular which can decrease costs.

As a second aspect of the invention, an exhaust gas manifold module for a large internal combustion engine, preferably an exhaust gas manifold module as described above, comprises a housing encompassing a receiving section and a distribution section separated from the receiving section.

The receiving section comprises at least one cylinder inlet fluidly connected or connectable to a cylinder of the engine for receiving exhaust gas from the respective cylinder, at least one catalyst-outlet fluidly connected or connectable to a catalyst for guiding exhaust gas to the catalyst, and at least one, preferably two, first turbocharger outlet each fluidly connected or connectable to a turbocharger for guiding exhaust gas to the respective turbocharger.

The distribution section comprises at least one catalyst-inlet fluidly connected or connectable to the catalyst for receiving exhaust gas from the catalyst, and at least one second turbocharger outlet, preferably two second turbocharger outlets. Each second turbocharger outlet is fluidly connected or connectable to the respective turbocharger as for the first turbocharger outlet for guiding exhaust gas to the respective turbocharger.

The exhaust gas manifold module according to the second aspect comprises at least one interface configured for fluidly connecting the exhaust gas manifold module to a further exhaust gas manifold module with a further receiving section and a further distribution section, such that, in a fluidly connected state, the receiving section is fluidly connected to the further receiving section and the distribution section is fluidly connected to the further distribution section.

The interface allows connecting the exhaust gas manifold module to a further exhaust gas manifold module which may also comprise at least one first and at least one second turbocharger outlet. The combined exhaust gas manifold system then may allow to serve at least two turbochargers.

When using the exhaust gas manifold modules described above exhaust gas having entered the exhaust gas manifold module may be guided directly to the turbocharger or may be treated in a catalyst and subsequently be guided to the turbocharger

It turned out to be advantageous to guide the exhaust gas back into the exhaust gas manifold module after treatment in the catalyst before it is guided into the turbocharger. A part of the pipework external the exhaust gas manifold module can be omitted, the arrangement is more compact and temperature differences can be compensated more easily. In addition, support structures can be reduced.

Typically, the exhaust gas manifold module may receive exhaust gas from the same catalyst which was served by the exhaust gas manifold module. Alternatively, especially in combustion engines with a plurality of exhaust gas manifold modules and/or catalysts, the exhaust gas manifold module may receive exhaust gas from a different catalyst.

Preferably, the volume of the distribution section is smaller than the volume of the receiving section.

Fluid connections may be established by mounting the exhaust gas manifold module into an internal combustion engine, that is by physically connecting the exhaust gas manifold module to the cylinder, the turbocharger and the catalyst and/or eventually to a further exhaust gas manifold module, and/or by opening respective valves. The exhaust gas manifold module may be mounted in the internal combustion engine. Preferably, the cylinder inlet, the catalyst-outlet, the first turbocharger outlets, the catalyst-inlet and/or the second turbocharger outlets comprise valves.

The interface may provide for a fluid connection between the exhaust gas manifold module and the further exhaust gas manifold module.

The interface comprises at least one opening for guiding exhaust gas out of and/or into the exhaust gas manifold module. Preferably, the interface comprises at least two openings, one for guiding exhaust gas out of and/or into the receiving section and one for guiding exhaust gas out of and/or into the distribution section.

The interface may comprise fixing elements, for example flanges, threads, and/or bayonet connectors for attachment of the further exhaust gas manifold module to the exhaust gas manifold module. The interface may comprise sealing elements for preventing leakage from the fluid connection between the exhaust gas manifold module and the further exhaust gas manifold module.

The interface may comprise at least one valve.

The interface allows to combine exhaust gas manifold modules, such that each exhaust gas manifold module may be fluidly connected or connectable to only a part of the cylinders of the internal combustion engine.

The interface may form one of a catalyst-outlet and a catalyst-inlet.

Exhaust gas released from the exhaust gas manifold module may enter the further exhaust gas manifold module via the interface before it is guided to the catalyst through the catalyst-outlet of the further exhaust gas manifold module. In this case, the catalyst-outlet of the exhaust gas manifold module is formed by the interface.

Exhaust gas may be received directly from a catalyst by the catalyst-inlet of the further exhaust gas manifold module and then enter the distribution section of the exhaust gas manifold module via the interface. In this case, the catalyst-inlet of the exhaust gas manifold module is formed by the interface. Similarly, exhaust gas may be received directly from a catalyst by the catalyst-inlet of the exhaust gas manifold module and then enter the distribution section of the further exhaust gas manifold module via the interface. In this case, the catalyst-inlet of the further exhaust gas manifold module is formed by the interface.

The interface may comprise a compensator, advantageously comprising a receiving section compensator for being arranged, in the connected state, between the receiving section and the further receiving section and/or comprising a distribution section compensator for being arranged, in the connected state, between the distribution section and the further distribution section.

The compensator can be a single compensator with a receiving section compensator section and a distribution section compensator section, or it may comprise separate compensators for forming the receiving section compensator and the distribution section compensator.

The compensator provides for compensating any unwanted relative movements, for example due to thermal expansion. Tensions between the exhaust gas manifold module and the further exhaust gas manifold module are reduced and oscillations may be absorbed. As a transfer of vibration is more critical for parts with the larger cross-sectional area, the exhaust gas manifold module preferably comprises at least a receiving section compensator section.

The receiving section may be elongated along a first longitudinal axis. The distribution section may also be elongated along a second longitudinal axis, wherein the first and the second longitudinal axis are arranged in parallel.

The longitudinal extension of the exhaust gas manifold module may be larger than the biggest cross-sectional diameter of the housing.

Exhaust gas may spread along the first and the second axis. A pair of a first and a second turbocharger outlet fluidly connected or connectable to the same turbocharger may be positioned in the same axial distance from a first longitudinal end. The cylinder inlets, the first turbocharger outlets and/or the second turbocharger outlets may be equally distributed along the first and the second longitudinal axes.

The first turbocharger outlets may be arranged along a longitudinal axis parallel to the first longitudinal axis.

The second turbocharger outlets may be arranged along a longitudinal axis parallel to the second longitudinal axis. The catalyst-inlet may be positioned, preferably centrally, between two second turbocharger outlets.

The first and the second turbocharger outlets may be arranged on the same lateral side of the housing, preferably on the lateral side on which the turbochargers may be positioned and preferably opposite the lateral side where the cylinders are arranged. Hence, the first and the second turbocharger outlets are more easily accessible and can be connected to the turbocharge with less effort.

In the mounted situation, the turbochargers may be arranged along a third longitudinal axis, parallel to the first and second longitudinal axis.

Both the receiving section and the distribution section may be arranged inside the housing. In particular, an outwardly facing exterior shape of a cross section, in particular perpendicular to the first and the second longitudinal axis, of the housing is convex.

The exhaust gas manifold module of this type has a more compact form, and effort for pipework and compensators is reduced.

At least one partition wall may be arranged within the housing for separating the receiving section and the distribution section. The housing may form a part of the boundary of the receiving section as well as of the distribution section.

The partition wall may have a curvature, such that the partition wall may be convex with respect to the distribution section.

The cylinder inlets, the first turbocharger outlets and/or the second turbocharger outlets may be arranged in the jacket surface of the housing, as well as one catalyst-inlet.

The exhaust gas manifold module may comprise at least one outlet line arranged outside the housing. The outlet line may be fluidly connected or connectable to one of the first turbocharger outlets and to one of the second turbocharger outlets and may be fluidly connected or connectable to a turbocharger. The outlet line may form a T-connection.

The outlet line may establish a connection between a first and/or second turbocharger outlet arranged in the housing and the turbocharger.

Preferably, the exhaust gas manifold module comprises an outlet line for each pair of a first turbocharger outlet and a second turbocharger outlet and/or for each turbocharger.

The exhaust gas manifold module may be elongated along a first longitudinal axis. The catalyst-outlet may be arranged at a first longitudinal end.

The interface, if present, may be arranged at the first longitudinal end or at a second longitudinal end opposite the first longitudinal end.

According to a further aspect of the invention, an exhaust gas manifold system comprises at least two modules of the group consisting of an exhaust gas manifold module according to the first aspect comprising an interface, and a further exhaust gas manifold module according to the second aspect.

The two exhaust gas manifold modules are fluidly connected by their respective interfaces.

The exhaust gas manifold system may comprise a common catalyst-outlet formed by the catalyst-outlet of one of the exhaust gas manifold modules.

The exhaust gas manifold system may comprise a common catalyst-inlet formed by the catalyst-inlet of one of the exhaust gas manifold modules.

The exhaust gas manifold system comprises at least two first turbocharger outlets and at least two second turbocharger outlets.

The exhaust gas manifold system may serve at least two turbochargers in parallel. This can be beneficial for maintenance work on the turbochargers, as a swapping of turbochargers with off-board maintenance instead of on-board maintenance is easier to provide. This helps to reduce the maintenance times and/or can save costs.

The exhaust gas manifold system may comprise an exhaust gas manifold module according to the first aspect comprising an interface and at least one further exhaust gas manifold module according to the first aspect comprising an interface.

The exhaust gas manifold system may comprise an exhaust gas manifold module according to the second aspect and at least one further exhaust gas manifold module according to the second aspect.

The exhaust gas manifold system may comprise an exhaust gas manifold module according to the first aspect comprising an interface and at least one further exhaust gas manifold module according to the second aspect.

The exhaust gas manifold system may comprise an exhaust gas manifold module according to the second aspect and at least one further exhaust gas manifold module according to the first aspect comprising an interface.

Other combinations, e.g. comprising more than two exhaust gas manifold modules may be possible as well.

The exhaust gas manifold modules of the exhaust gas manifold system may be longitudinally extended and may be adjacent at their longitudinally ends such that the exhaust gas manifold system is longitudinally extended.

The exhaust gas manifold system may comprise pairs of one first and one second turbocharge outlets, each pair fluidly connected or connectable to a respective outlet line to supply respective turbochargers in parallel. The first and second turbocharger outlets forming such a pair may be arranged at the same longitudinal distance of a longitudinal end of the exhaust gas manifold system. The first and second turbocharger outlets forming a pair may be arranged close to each other, for example at a distance smaller than the distance between two first turbocharger outlets or the distance between two second turbocharger outlets.

The exhaust gas manifold system may comprise a compensator arranged between the interfaces of the respective exhaust gas manifold modules. The compensator may be a compensator as described above.

According to a further aspect of the invention, an exhaust gas treatment device for an internal combustion engine comprises at least one exhaust gas manifold module as described above or an exhaust gas manifold system as described above, such that the exhaust gas treatment device comprises at least two first turbocharger outlets and at least two second turbocharger outlets.

The exhaust gas treatment device comprises a catalyst comprising at least one first catalyst element, in particular an SCR catalyst element. The catalyst is fluidly connected or connectable to the catalyst-outlet of the exhaust gas manifold module or to the common catalyst-outlet of the exhaust gas manifold system and the catalyst is fluidly connected or connectable to the catalyst-inlet of the exhaust gas manifold module or to the common catalyst-inlet of the exhaust gas manifold system. Thus, exhaust gas may be guided from the receiving section to the catalyst and subsequently to the distribution section. From there, the exhaust gas may be guided to at least two turbochargers in parallel via the at least two second turbocharger outlets.

Alternatively or additionally, the exhaust gas may be directly guided to the at least two turbochargers in parallel via the at least two first turbocharger outlets, without treatment in the exhaust gas treatment device.

The exhaust gas manifold module may be part of an exhaust gas treatment device, wherein a catalyst container or a catalyst is arranged parallel and/or adjacent to the exhaust gas manifold module and/or wherein the catalyst container or the catalyst is separated from the receiving section by a partition wall. The catalyst-outlet may be formed by an opening in the partition wall.

According to a further aspect of the invention, an internal combustion engine, in particular a dual fuel combustion engine, comprises at least one cylinder and an exhaust gas treatment device as described above. The at least one cylinder may be a large cylinder with an inner diameter of at least 200 mm. Preferably the internal combustion engine comprises a plurality of cylinders, for example at least four and up to twelve cylinders.

The internal combustion engine may comprise at least a first and a second turbocharger. The first turbocharger may be fluidly connected or connectable to both one of the first turbocharger outlets and one of the second turbocharger outlets. The second turbocharger may be fluidly connected or connectable to both the other one of the first turbocharger outlets and the other one of the second turbocharger outlets.

Thus, the first and the second turbocharger may be served in parallel. The internal combustion engine may comprise a number of turbochargers, which number may correspond to the number of the first and second turbocharger outlets, such that each turbocharger can be connected to a respective pair of first and second turbocharger outlets.

According to a further aspect of the invention, a method for operating an internal combustion engine as described above, comprises the step of guiding exhaust gas from the at least one cylinder into the receiving section. The method further comprises at least one step of the following steps.

Exhaust gas is guided through at least one, in particular all, of the first turbocharger outlets to a respective turbocharger. For example, in Tier II mode or when a catalyst is not available for any reason, exhaust gas may directly be guided from the receiving section to the turbocharger.

In this case, the exhaust gas may be distributed in the receiving section or in the receiving sections to at least two first turbocharger outlets, such that equal amounts of exhaust gas and/or exhaust gas with similar pressure is guided to at least two turbochargers.

Alternatively or additionally, exhaust gas is guided through the catalyst-outlet or the common catalyst-outlet to the catalyst, exhaust gas is received from the catalyst at the catalyst-inlet or the common catalyst, and exhaust gas is guided through at least one, in particular all, of the second turbocharger outlets to a respective turbocharger.

Typically, the exhaust gas may be distributed in the distribution section and/or in the distribution section to at least two second turbocharger outlets, such that equal amounts of exhaust gas and/or exhaust gas with similar pressure is guided to a least two turbochargers.

### Brief Description of the Drawings

The invention will be better understood and objects other than those set forth above will become apparent when consideration is given to the following detailed description thereof. Such description makes reference to the annexed drawings, wherein:
- Figure 1: shows a schematic representation of an embodiment of a large combustion engine;
- Figure 2: shows a perspective view with section of a first example of an exhaust gas manifold module;
- Figure 3: shows an example of an exhaust gas manifold system in a perspective view;
- Figure 4: shows an example of an exhaust gas treatment device in a sectional view;
- Figure 5: shows a part of a large combustion engine in a front view;
- Figure 6: shows the part of a large combustion engine in a perspective view;
- Figure 7: shows an example of an exhaust gas manifold module in a sectional view.

### Modes for Carrying Out the Invention

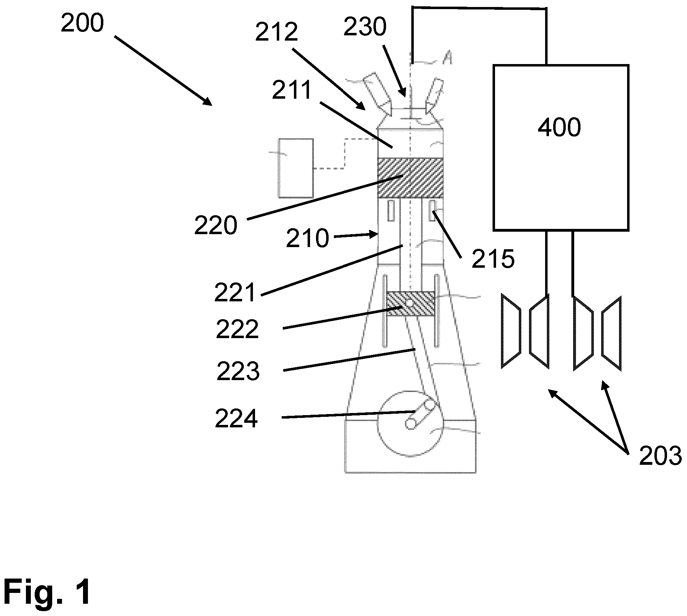

Fig. 1 shows a schematic representation of an embodiment of a large combustion engine.

In figure 1, only one of the cylinders 210 of the large engine 200 is shown. Usually, the large engine 200 comprises a plurality of cylinders 210, for example at least four and up to twelve cylinders 210 or even more. The term "large combustion engine" refers to internal combustion engines that are typically used as drive units for ships or in stationary operations, such as driving large generators for generating electrical energy.

Typically, the cylinders 210 of a large engine 200 each have an inner diameter (bore) of at least about 200 mm. Large engines 200 are known in various configurations, for example as two-stroke engines or four-stroke engines.

In the following description, reference is made by way of example to a large engine 200 configured as a longitudinally scavenged two-stroke large engine having a plurality of cylinders 210. Each cylinder 210 has a combustion chamber 211. Furthermore, in each cylinder 210, a piston 220 is arranged for reciprocating movement between a top dead center and a bottom dead center.

The term "longitudinally scavenged" means that the scavenging or charging air is introduced into the cylinder 210 in the area of the lower end, and an exhaust valve 230 is arranged in or at the cylinder cover 212 located at the upper end of the cylinder 210.

In each cylinder 210, the piston 220 is connected in a manner known per se to a crosshead 222 via a piston rod 221. The cross-head 222 is connected to a crankshaft 224 via a push rod or connecting rod 223, so that the movement of the piston 220 is transmitted via the piston rod 221, the crosshead 222, and the connecting rod 223 to the crankshaft 224 to rotate it. The upper side of the piston 220, together with the cylinder cover 212, delimits the combustion chamber 211 into which the first fuel and/or the second fuel is introduced.

In the embodiment of a longitudinally scavenged two-stroke large diesel engine 200, scavenging air slots 215 are usually provided in the lower region of each cylinder 210 or cylinder liner. These slots are periodically closed and opened by the movement of the piston 220 in the cylinder 210, allowing the scavenging air provided by the turbocharger under charging pressure to flow into the cylinder 210 through the scavenging air slots 215 when they are open. In the cylinder cover 212, the usually centrally arranged exhaust valve 230 is provided, through which the exhaust gases can be discharged from the cylinder 210 into the exhaust gas treatment device 400 and from there to a turbocharger 203, preferably to at least two turbochargers 203.

The use of a plurality of small turbocharges instead of a single larger turbocharger provides an improved maintenance. A smaller turbocharger may be removed from the ship for exchange and/or repair such that off-board maintenance becomes an option. On the contrary, a larger turbocharger has to be maintained and/or repaired on ship.

It is noted that the invention is not restricted to this specific type of a longitudinally scavenged two-stroke large engine 200, which can be operated with the first fuel and/or with the second fuel. The large engine can also be any other type of large engine. In particular, it is possible that the large engine is configured for the combustion of only one fuel.

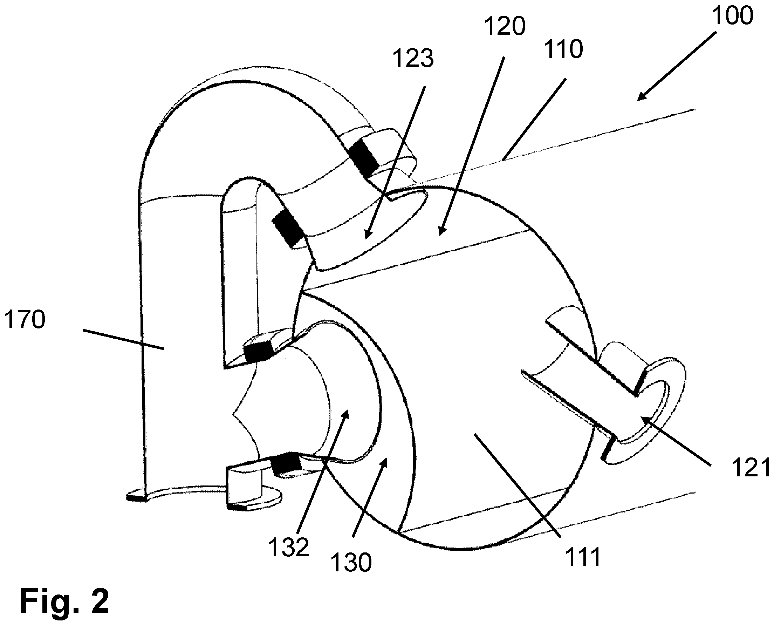

Figure 2 shows a perspective view with section of a first example of an exhaust gas manifold module 100.

The exhaust gas manifold module 100 comprises a housing 110 encompassing a receiving section 120 and a distribution section 130. A partition wall 111 arranged within the housing 110 separates the receiving section 120 and the distribution section 130.

The receiving section 120 comprises cylinder inlets 121 fluidly connected or connectable to respective cylinders 210 (see figure 1) of the engine 200 for receiving exhaust gas from the respective cylinder 210.

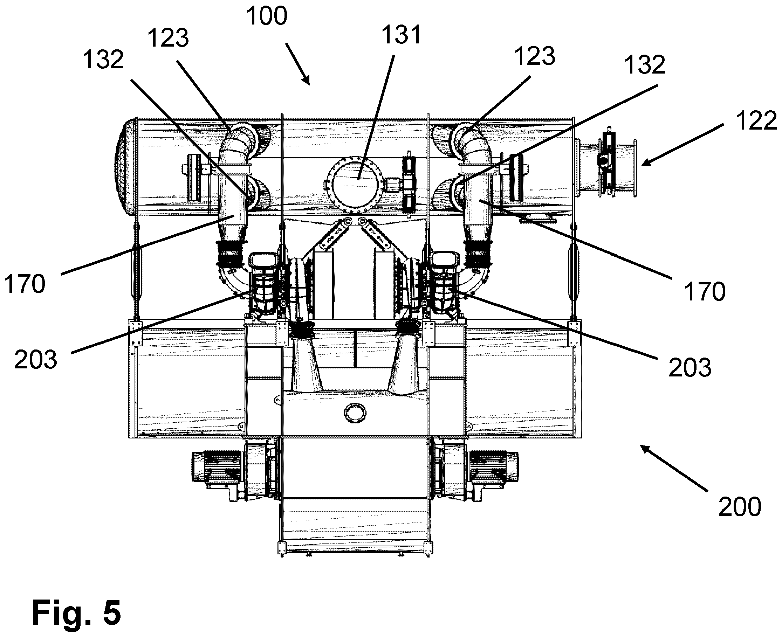

The receiving section 120 comprises a first turbocharger outlet 123 fluidly connected or connectable to an outlet line 170 for guiding exhaust gas to the turbocharger 203 (see figures 1 and 5).

The distribution section 130 comprises a second turbocharger outlet 132 fluidly connected or connectable to the outlet line 170 as for the first turbocharger outlet 123 also for guiding exhaust gas the turbocharger 203 (see figures 1 and 5).

The first turbocharger outlet 123 and the second turbocharger outlet 132 form a pair of turbocharger outlets which supplies the same turbocharger 203 (see figures 1 and 5) via the outlet line 170.

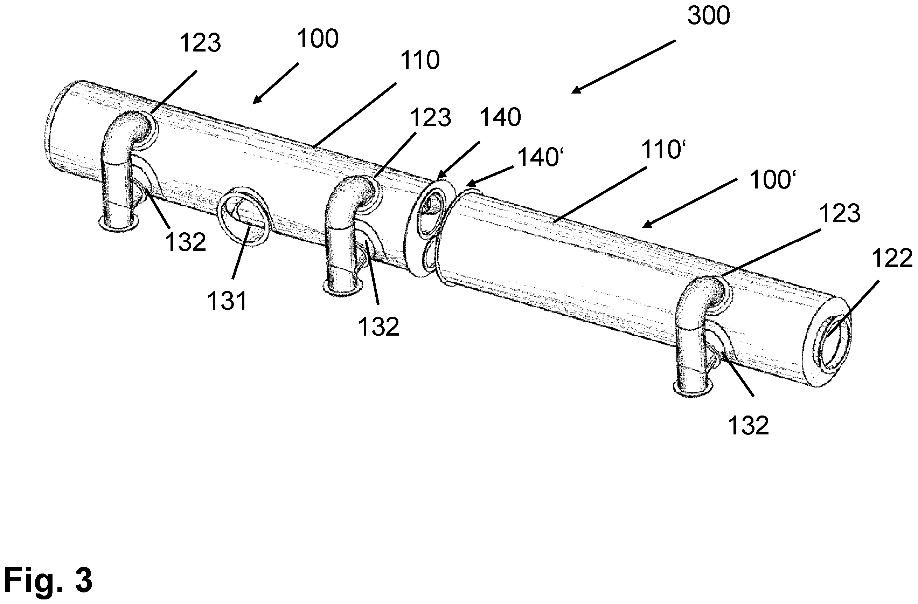

Figure 3 shows an example of an exhaust gas manifold system 300 in a perspective view.

The exhaust gas manifold system 300 comprises an exhaust gas manifold module 100 having two turbocharger outlets 123 and two second turbocharger outlets 132 arranged in the jacket of the housing 110.

The exhaust gas manifold system 300 further comprises a further exhaust gas manifold module 100' having one first turbocharger outlets 123 and one second turbocharger outlets 132 arranged in the jacket of the housing 110'.

This first example of an exhaust gas manifold system 300 hence comprises three pairs of turbocharger outlets which may supply exhaust gas to three turbochargers (not shown in the figure).

The exhaust gas manifold module 100 and the further exhaust gas manifold module 100' are connected via interfaces 140, 140'.

The further exhaust gas manifold module 100' comprises a catalyst-outlet 122 arranged at longitudinal end fluidly connectable to a catalyst (not shown in the figure) for guiding exhaust gas to the catalyst.

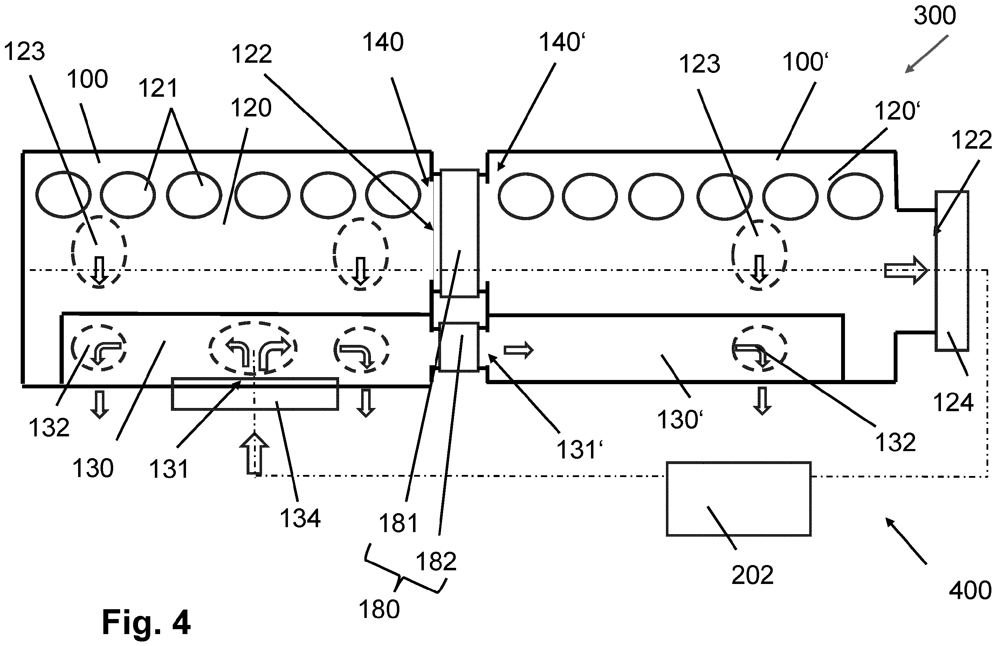

The exhaust gas manifold module 100 comprises a catalyst-inlet 131 arranged in the jacket of the housing 110 fluidly connectable to the catalyst (not shown in the figure) for receiving exhaust gas from the catalyst. Exhaust gas may be guided from the receiving section 120 (see figure 4) of the exhaust gas manifold module 100 to the further receiving section 120' (see figure 4) of the further exhaust gas manifold module 100' via the interfaces 140, 140' and be guided to the catalyst through the catalyst-outlet 122 of the further receiving section 120' (see figure 4).

Exhaust gas having entered the distribution section 130 (see figure 2) of the exhaust gas manifold module 100 may be guided to the further distribution section 130' (see figure 4) of the further exhaust gas manifold module 100' via the interfaces 140, 140'.

The exhaust gas manifold system 300 comprises a common catalyst-outlet 122 and a common catalyst-inlet 131.

Figure 4 shows an example of an exhaust gas treatment device 400 in a sectional view. The exhaust gas treatment device 400 comprises an exhaust gas manifold system 300 as shown in figure 3.

The exhaust gas manifold system 300 comprises an exhaust gas manifold module 100 and a further exhaust gas manifold module 100'.

The exhaust gas manifold module 100 comprises a receiving section 120 having two first turbocharger outlets 123 and a distribution section 130 having two second turbocharger outlets 132, whereas the further exhaust gas manifold module 100' comprises a further receiving section 120' having only one first turbocharger outlet 123 and a further distribution section 130' having one second turbocharger outlet 132.

The exhaust gas manifold module 100 and the further exhaust gas manifold module 100' each comprise six cylinder-inlets 121 for connection to twelve cylinders (see figure 1) in total.

The exhaust gas manifold module 100 comprises an interface 140 configured for fluidly connecting the exhaust gas manifold module 100 to the further exhaust gas manifold module 100' with a further interface 140', a receiving section 120' and a further distribution section 130', such that, in a fluidly connected state, the receiving section 120 is fluidly connected to the further receiving section 120' and the distribution section 130 is fluidly connected to the further distribution section 130'.

The interface 140 forms the catalyst-outlet 122 of the exhaust gas manifold module 100. The interface 140' forms the catalyst-inlet 131' of the further exhaust gas manifold module 100'.

A compensator 180 is arranged between the exhaust gas manifold module 100 and the further exhaust gas manifold module 100'.

The compensator 180 comprises a receiving section compensator section 181 which is arranged between the receiving section 120 of the exhaust gas manifold module 100 and the further receiving section 120' of the further exhaust gas manifold module 100'.

The compensator 180 comprises a distribution section compensator section 182 arranged between the distribution section 130 of the exhaust gas manifold module 100 and the further distribution section 130' of the further exhaust gas manifold module 100'.

The catalyst-outlet 122 of the further exhaust gas manifold module 100' forms the common catalyst-outlet 122 of the exhaust gas manifold system 300. By opening a catalyst-outlet valve 124 in the catalyst-outlet 122, a fluid connection is established between the receiving section 120' (and, as the receiving sections 120, 120' are fluidly connected via the interfaces 140, 140', also with the receiving section 120) and a catalyst 202.

The catalyst-inlet 131 of the exhaust gas manifold module 100 forms the common catalyst-inlet 131 of the exhaust gas manifold system 300. By opening a catalyst-inlet valve 134 in the catalyst-inlet 131, a fluid connection is established between the catalyst 202 and the distribution section 130 (and, as the distribution sections 130, 130' are fluidly connected via the interfaces 140, 140', also with the distribution section 130').

Figure 5 shows a part of a large internal combustion engine 200 in a front view.

The internal combustion engine 200 comprises an exhaust gas manifold module 100, having six cylinder inlets 121, two first turbocharger outlets 123, a catalyst-outlet 122, a catalyst-inlet 131 and two second turbocharger outlets 132.

Each one of the first turbocharger outlets 123 forms a respective pair of turbocharger outlets with each one of the two second turbocharger outlets 132.

The pairs of turbocharger outlets are fluidly connected with a respective outlet line 170.

The internal combustion engine 200 comprises two turbochargers 203, each connected to a respective one of the outlet lines 170. The turbochargers 203 may easily be lifted upwards and be removed from the internal combustion engine 200. This simplifies maintenance.

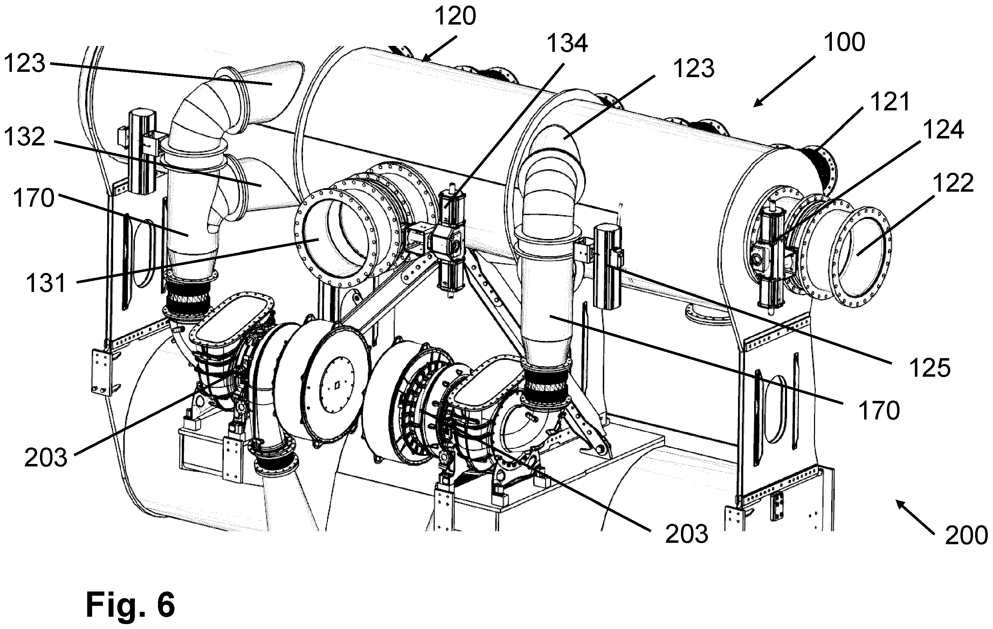

Figure 6 shows the part of a large combustion engine 200 in a perspective view. The figure accordingly shows the same reference number as figure 5.

The catalyst-outlet 122 can be closed, opened or partially opened with a catalyst-outlet valve 124, in this case a butterfly valve.

The catalyst-inlet 131 can be closed, opened or partially opened with a catalyst-inlet valve 134.

Each of the first turbocharger outlets 123 can be closed, opened or partially opened with a respective first turbocharger outlet valve 125.

In TIER III mode exhaust gas may be guided from the receiving section 120 first to the catalyst 202 (see figure 4) and subsequently to the turbocharger 203. In this case the first turbocharger outlets 123 are closed and the catalyst-outlet valve 124 as well as the catalyst-inlet valve 134 are open.

Alternatively, for example in TIER II mode, exhaust gas may be guided from the receiving section 120 directly to the turbocharger 203. In this case the first turbocharger outlets 123 are open. The catalyst-outlet valve 124 is closed in this case to prevent a downstream flow of exhaust gas into the catalyst. Additionally, the catalyst-inlet valve 134 may be closed to prevent also an upstream flow of exhaust gas into the catalyst.

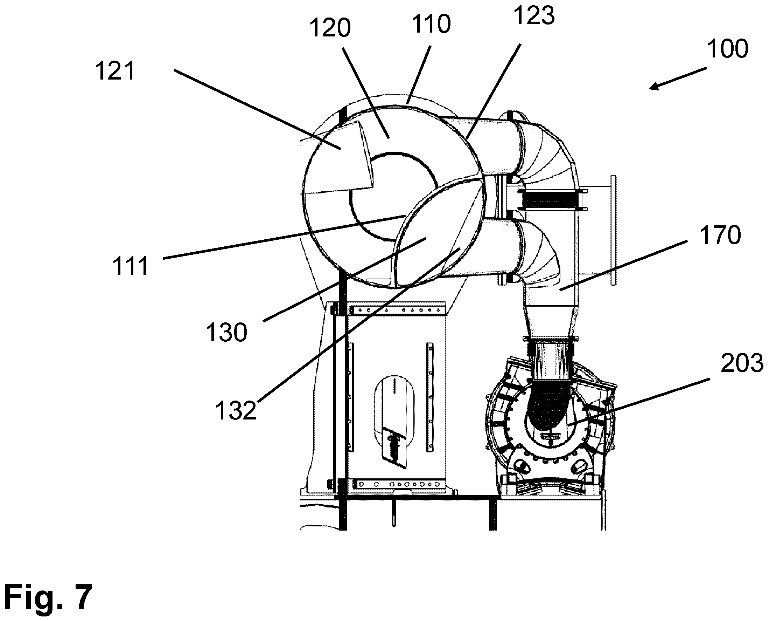

Figure 7 shows an example of an exhaust gas manifold module 100 in a sectional view.

The exhaust gas manifold module 100 comprises a mainly cylindrical housing 110 encompassing a receiving section 120 and a distribution section 130. A curved partition wall 111 is arranged within the housing 110 which separates the receiving section 120 and the distribution section 130.

The receiving section 120 comprises a cylinder inlet 121, in this case a pipe which leads into the housing 110. Arranged in the jacket of the housing, there is a first turbocharger outlet 123 for guiding exhaust gas out of the receiving section 120 and a second turbocharger outlet 132 for guiding exhaust gas out of the distribution section 130.

An outlet pipe 170 fluidly connects the first turbocharger outlet 123 and the second turbocharger outlet 132 with the turbocharger 203.

Any embodiments described with respect to the device shall similarly pertain to the method. Synergetic effects may arise from different combinations of the embodiments although they might not be described in detail.

While there are shown and described presently preferred embodiments of the invention, it is to be distinctly understood that the invention is not limited thereto but may be otherwise variously embodied and practiced within the scope of the following claims.

## Claims

1. An exhaust gas manifold module (100) for a large internal combustion engine (200), the exhaust gas manifold module (100) comprising a housing (110, 110') encompassing
a receiving section (120, 120') with
- at least one cylinder inlet (121) fluidly connected or connectable to a cylinder (210) of the engine (200) for receiving exhaust gas from the respective cylinder (210),
- at least one catalyst-outlet (122) fluidly connected or connectable to a catalyst (202) for guiding exhaust gas to the catalyst (202), and
at least two first turbocharger outlets (123) each fluidly connected or connectable to a turbocharger (203) for guiding exhaust gas to the respective turbocharger (203), and wherein the housing (110) further encompasses a distribution section (130, 130') separated from the receiving section (120, 120'),
**characterized in that**
the distribution section (130, 130') comprises
- at least one catalyst-inlet (131, 131') fluidly connected or connectable to the catalyst (202) for receiving exhaust gas from the catalyst (202), and
- at least two second turbocharger outlets (132) each fluidly connected or connectable to the respective turbocharger (203) as for the first turbocharger outlets (123) for guiding exhaust gas to the respective turbocharger (203).

2. The exhaust gas manifold module (100) according to claim 1, comprising an interface (140) configured for fluidly connecting the exhaust gas manifold module (100) to a further exhaust gas manifold module (100') with a further receiving section (120') and a further distribution section (130'), such that, in a fluidly connected state, the receiving section (120) is fluidly connected to the further receiving section (120') and the distribution section (130) is fluidly connected to the further distribution section (130').

3. An exhaust gas manifold module (100, 100') for a large internal combustion engine (1), preferably an exhaust gas manifold module (100) according to claim 1, the module (100, 100') comprising a housing (110, 110') encompassing a receiving section (120, 120') with
- at least one cylinder inlet (121) fluidly connected or connectable to a cylinder (210) of the engine (200) for receiving exhaust gas from the respective cylinder (210),
- at least one catalyst-outlet (122) fluidly connected or connectable to a catalyst (202) for guiding exhaust gas to the catalyst (202), and
- at least one, preferably two, first turbocharger outlet (123) each fluidly connected or connectable a turbocharger (203) for guiding exhaust gas to the respective turbocharger (203),
and wherein the housing further encompasses a distribution section (130, 130') separated from the receiving section (120, 120'), the distribution section (130, 130') comprising
- at least one catalyst-inlet (131, 131') fluidly connected or connectable to the catalyst (202) for receiving exhaust gas from the catalyst (202),
- and at least one, preferably two, second turbocharger outlet (132) each fluidly connected or connectable to the respective turbocharger (203) as for the first turbocharger outlet (123) for guiding exhaust gas to the respective turbocharger (203),
**characterized in that**
the exhaust gas manifold module (100, 100') comprises at least one interface (140) configured for fluidly connecting the exhaust gas manifold module (100, 100') to a further exhaust gas manifold module (100, 100') with a further receiving section (120, 120') and a further distribution section (130, 130'), such that, in a fluidly connected state, the receiving section (120, 120') is fluidly connected to the further receiving section (120, 120') and the distribution section (130, 130') is fluidly connected to the further distribution section (130, 130').

4. The exhaust gas manifold module (100) according to any one of claim 2 or claim 3, wherein the interface (140) forms one of a catalyst-outlet (122) and a catalyst-inlet (131').

5. The exhaust gas manifold module (100) according to any one of claim 2 to claim 4, wherein the interface (140) comprises a compensator (180), advantageously comprising a receiving section compensator (181) for being arranged, in the connected state, between the receiving section (120) and the further receiving section (120'), and comprising a distribution section compensator (182) for being arranged, in the connected state, between the distribution section (130) and the further distribution section (130').

6. The exhaust gas manifold module (100) according to any one of the preceding claims, wherein the receiving section (120, 120') is elongated along a first longitudinal axis and wherein the distribution section (130, 130') is elongated along a second longitudinal axis, and wherein the first and the second longitudinal axes are arranged in parallel.

7. The exhaust gas manifold module (100) according to any one of the preceding claims wherein both the receiving section (120, 120') and the distribution section (130, 130') are arranged inside the housing, and in particular wherein an outwardly facing exterior shape of a cross section of the housing is convex.

8. The exhaust gas manifold module (100) according to any one of the preceding claims, comprising at least one partition wall (111) arranged within the housing (110, 110') for separating the receiving section (120, 120') and the distribution section (130, 130').

9. The exhaust gas manifold module (100) according to any one of the preceding claims, comprising at least one outlet line (170) arranged outside the housing (110) and fluidly connected or connectable to one of the first turbocharger outlets (123) and to one of the second turbocharger outlets (132) and fluidly connected or connectable to a turbocharger (203).

10. The exhaust gas manifold module (100) according to any one of the preceding claims, wherein the exhaust gas manifold module (100, 100') is elongated along a first longitudinal axis, and wherein at least one of the following:
- the catalyst-outlet (122) is arranged at a first longitudinal end, and
- the interface (140) is arranged at the first longitudinal end or at a second longitudinal end opposite the first longitudinal end.

11. An exhaust gas manifold system (300) comprising at least two modules of the group consisting of
- an exhaust gas manifold module (100) according to claim 2, and
- a further exhaust gas manifold module (100') according to claim 3,
wherein the two exhaust gas manifold modules (100, 100') are fluidly connected by their respective interfaces (140)
• such that the exhaust gas manifold system (300) comprises a common catalyst-outlet (122) formed by the catalyst-outlet (122) of one of the exhaust gas manifold modules (100, 100'),
• such that the exhaust gas manifold system (300) comprises a common catalyst-inlet (131) formed by the catalyst-inlet (131) of one of the exhaust gas manifold modules (100, 100'), and
• such that the exhaust gas manifold system (300) comprises at least two first turbocharger outlets (123) and at least two second turbocharger outlets (132).

12. The exhaust gas manifold system (300) according to claim 10 comprising a compensator (180) arranged between the interfaces (140) of the respective exhaust gas manifold modules (100, 100').

13. An exhaust gas treatment device (400) for an internal combustion engine (1), the exhaust gas treatment device (400) comprising
- at least one exhaust gas manifold module (10) according to any one of the claims 1 to 9 or an exhaust gas manifold system according to any one of the claims 10 to 11, such that the exhaust gas treatment device (400) comprises at least two first turbocharger outlets (123) and at least two second turbocharger outlets (132), and
- a catalyst (20) comprising at least one first catalyst element (21), in particular an SCR catalyst element, fluidly connected or connectable to the catalyst-outlet (122) of the exhaust gas manifold module (10) or to the common catalyst-outlet (122) of the exhaust gas manifold system (300) and
fluidly connected or connectable to the catalyst-inlet (131) of the exhaust gas manifold module (10) or to the common catalyst-inlet (131) of the exhaust gas manifold system.

14. An internal combustion engine (200), in particular a dual fuel combustion engine, comprising at least one cylinder (210), and comprising an exhaust gas treatment device (400) according to claim 13.

15. The internal combustion engine (200) according to claim 14, comprising at least a first and a second turbocharger (203),
wherein the first turbocharger is fluidly connected or connectable to both one of the first turbocharger outlets (123) and one of the second turbocharger outlets (132) and wherein the second turbocharger is fluidly connected or connectable to both the other one of the first turbocharger outlets (123) and the other one of the second turbocharger outlets (132).

16. A method for operating an internal combustion engine (200) according any one of the claims 14 to 15, comprising a step of:
- guiding exhaust gas from the at least one cylinder (210) into the receiving section (120, 120'), and
comprising at least one step of the group consisting of:
- guiding exhaust gas through at least one, in particular all, of the first turbocharger outlets (123) to a respective turbocharger (203), and
- guiding exhaust gas through the catalyst-outlet (122) or the common catalyst-outlet (122) to the catalyst, receiving exhaust gas from the catalyst at the catalyst-inlet (131) or the common catalyst (131), and guiding exhaust gas through at least one, in particular all, of the second turbocharger outlets (132) to a respective turbocharger (203).
